# EUROPEAN PATENT APPLICATION

(11) **EP 4 542 697 A1**
(43) Date of publication of application: **23.04.2025**
(21) Application number: 23824233.3
(22) Date of filing: 14.06.2023
(51) Int. Cl.: H01M 10/04, H01M 10/0585

(54) **SIDE SEALING DEVICE FOR ELECTRODE STACK, SECONDARY BATTERY HAVING ELECTRODE STACK, AND MANUFACTURING METHOD THEREFOR**

(30) Priority: 14.06.2022 KR 20220072015
(71) Applicant: LG Energy Solution, Ltd., Seoul 07335 (KR)
(72) Inventor: LEE, Jun Ho, Daejeon 34122 (KR)
(74) Representative: Goddar, Heinz J.
(86) International application number: PCT/KR2023/008215
(87) International publication number: WO 2023/244020

(57) **Abstract**

A side sealing device for a stacked electrode body according to a preferred example of the present invention may comprise a seating part in which a stacked electrode body cross-laminated with positive electrodes, separators, and negative electrodes is seated; a press part pressurizing both sides of non-electrode sides of the stacked electrode body up and down to form sealing surfaces made of the separators so that ends of the separators come into close contact with each other up and down; and an adhesive application part applying an adhesive to the sealing surfaces in order to strengthen the sealing surfaces by imparting a fixing force between the separators forming the sealing surfaces.

## Description

### Technical Field

The present invention relates to a side sealing device for a stacked electrode body, a secondary battery comprising the stacked electrode body, and a manufacturing method thereof, and specifically, relates to a side sealing device forming a solid sealing surface toward a non-electrode side of a stacked electrode body, and a manufacturing method thereof.

This application claims the benefit of priority based on Korean Patent Application No. 10-2022-0072015 dated June 14, 2022, the disclosure of which is incorporated herein by reference in its entirety.

### Background Art

In general, types of secondary batteries include nickel cadmium batteries, nickel hydrogen batteries, lithium-ion batteries, and lithium-ion polymer batteries, and the like.

Such secondary batteries attract attention not only as small products such as digital cameras, P-DVDs, MP3Ps, mobile phones, PDAs, portable game devices, power tools, and E-bikes, but also as power sources for electric vehicles (EVs), hybrid electric vehicles (HEVs), parallel hybrid electric vehicles (PHEVs), and the like.

Medium-to-large battery modules electrically connecting several battery cells are used due to the need for high output and large capacity in medium-to-large devices such as automobiles. However, since it is preferable that the medium-to-large battery modules are manufactured as small and light as possible, rectangular batteries, pouch-type batteries, and the like that can be charged with a high integration degree and are lightweight compared to their capacity are mainly used as battery cells of the medium-to-large battery module.

In order to manufacture such a secondary battery, first, a stacked electrode body with a predetermined shape is formed by applying an electrode active material slurry to a positive electrode current collector and a negative electrode current collector to prepare a positive electrode (cathode) and a negative electrode (anode), and laminating them on both sides of a separator. Then, the stacked electrode body is accommodated in a battery case, and an electrolyte is injected and then sealed.

The stacked/folding electrode assemblies disclosed in the present applicant's Korean Laid-Open Patent Publication Nos. 2001-0082059, and 2001-0082060 have a full cell, which is a structure in which positive electrode/separator/negative electrode are sequentially laminated, as a unit cell, and are manufactured by repeatedly winding a long separator sheet by a unit length in a state where a plurality of full cells is disposed on the separator sheet.

In the case of such a stacked/folding electrode assembly, the outer shell of all full cells is surrounded by the separator sheet, so that the relative positions between the respective layers constituting the structure of the electrode assembly are fixed.

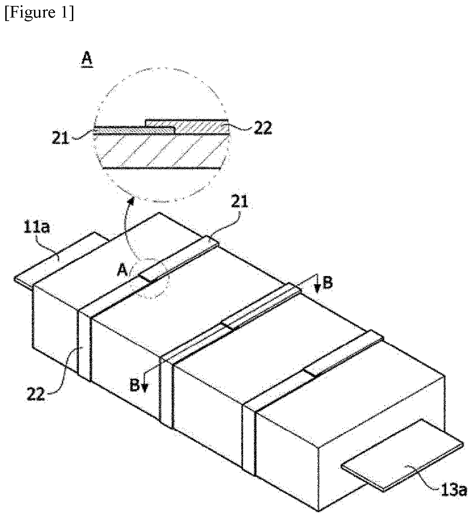

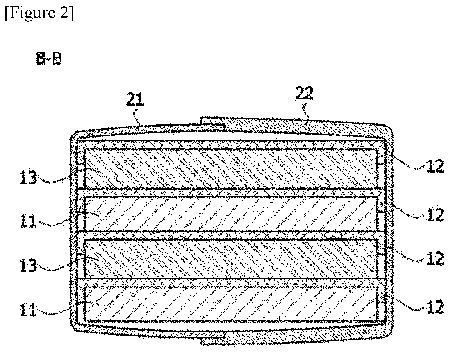

Figures 1 and 2 are diagrams for explaining a taping structure of a stacked electrode assembly according to the prior art.

Unlike the stacked/folding electrode assembly, the relative position between the electrode and the separator is not fixed, so that the side of the electrode assembly is taped using a tape to fix the relative positions between the respective layers. As shown in Figures 1 and 2, conventionally, the tapes (21, 22) surround the stacked electrode body in a band shape.

Referring to Figure 2, in the stacked electrode assembly, a positive electrode (11), a separator (12), and a negative electrode (13) are sequentially laminated. The separator (12) is disposed between the positive electrode (11) and the negative electrode (13), and prevents an electrical short circuit due to physical contact between the positive electrode (11) and the negative electrode (13).

In the case of such a stacked electrode assembly, in general, the separator (12) is manufactured to have wider horizontal and vertical widths than the electrodes (11, 13), and the stacked electrode assembly is manufactured by repeatedly performing a step of laminating the separator on a magazine or jig having a width corresponding to the horizontal or vertical width of the separator, and laminating an electrode thereon. Thereafter, the stacked electrode assembly is integrally introduced into subsequent processes to manufacture a secondary battery.

Since the stacked electrode assembly is integrally introduced into subsequent processes as one assembly, it is preferable to prevent the lamination from being distorted during the subsequent processes. To this end, conventionally, the lamination of the stacked electrode assembly was fixed through tapes so as not to be distorted.

Specifically, the tapes (21, 22) are taped while surrounding the outer surface of the stacked electrode body, and at this instance, as the ends of the tapes overlap, a step is generated by the overlapping thickness of the tapes. Due to the step caused by the taping, defects due to lithium precipitation may occur in the step portion (see A of Figure 1).

Also, in the taping process after the stack process, separators positioned at the upper s ide and lower side of the stacked electrode assembly may be peeled off or torn to expose the electrodes, resulting in defects.

Then, when the electrolyte is injected into the battery case in the packaging process, the long sides (non-electrode sides) are not sealed, so that a phenomenon in which the terminal separator is peeled off may occur, which may cause a problem of electrode exposure. In addition, when the secondary battery is transported after packaging is completed, waves are generated according to shaking of the electrolyte, and the generated waves affect the peeled separator, whereby there may also be a phenomenon that the separator is torn.

Furthermore, the conventional stacked electrode body does not block the inflow of foreign substances to the side, so that when foreign substances are introduced into the stacked electrode body during use, there has been a problem that a low voltage defect due to foreign substances occurs.

### Disclosure

### Technical Problem

The present invention is intended to provide a side sealing device for a stacked electrode body capable of preventing a separator tearing phenomenon that may occur on the long side (non-electrode side) of the stacked electrode body.

Through one example of the present invention, it is intended to provide a side sealing device for a stacked electrode body, which pre-forms the long side of the stacked electrode body so that the sealing surface is formed toward the long side of the stacked electrode body, and then applies an adhesive thereto so that the sealing surface composed of separators is firmly maintained.

Through one example of the present invention, it is intended to provide a stacked electrode body in which a sealing surface formed by closely contacting separators with each other continuously is formed toward the long side to prevent separator damage, and a secondary battery comprising the same.

Through one example of the present invention, it is intended to provide a side sealing device capable of imparting rigidity to the separator extension portions toward the long side effectively and easily through up-down press and lateral-directional pressurization of the separator extension portions toward the long side, and a method thereof.

Through one example of the present invention, it is intended to provide a stacked electrode body capable of effectively and easily protecting separators toward the long side through up-down pressurization of the separators and fixing force enhancement between the separators by means of the adhesive applied in a lateral direction while using conventional separators as they are, and a secondary battery comprising the same.

### Technical Solution

In order to achieve the above-described object, according to one example of the present invention, it is possible to provide a side sealing device for a stacked electrode body, comprising: a seating part in which a stacked electrode body cross-laminated with positive electrodes, separators, and negative electrodes is seated; a press part pressurizing both sides of non-electrode sides of the stacked electrode body up and down to form sealing surfaces made of the separators so that ends of the separators come into close contact with each other up and down; and an adhesive application part applying an adhesive to the sealing surfaces in order to strengthen the sealing surfaces by imparting a fixing force between the separators forming the sealing surfaces.

It is preferable that the press part is provided to pressurize extension portions of the separators extending further in the width direction of the stacked electrode body than the positive electrodes or the negative electrodes.

The press part may comprise a roller part performing rotational pressurization.

It is preferable that the roller part performs pressurization such that the separators have a bending degree increasing, based on the height direction of the stacked electrode body, from the center toward the upper side and lower side.

It is preferable that the rolling part comprises an upper roller disposed in parallel with the longitudinal direction of the stacked electrode body and pressurizing and rolling the upper surface of the stacked electrode body while operating downward in the height direction of the stacked electrode body; and a lower roller facing the upper roller and disposed in parallel with the upper roller, and pressurizing and rolling the lower surface of the stacked electrode body while operating upward in the height direction of the stacked electrode body.

The upper roller and the lower roller pressurize and roll the stacked electrode body up and down while moving in the width direction of the stacked electrode body outward from the stacked electrode body, whereby the long sides of the stacked electrode body may be pre-formed. That is, the sealing surface may be pre-formed. The sealing surfaces may be formed so that the ends of the separators are in close contact with each other.

It is preferable that the adhesive application part is provided to move integrally with the lower roller, and is provided to move independently from the lower roller when applying the adhesive.

It is preferable that the adhesive application part preferably applies the adhesive while moving in the longitudinal direction of the stacked electrode body and the height direction of the stacked electrode body according to the preset application pattern.

The adhesive application part may comprise an application frame provided with an X-axis guide rail in the longitudinal direction of the stacked electrode body; an X-axis moving part installed on the X-axis guide rail to be movable left and right; and an adhesive application member applying the adhesive toward the sealing surface while moving according to the movement of the X-axis moving part.

The adhesive application part may comprise a Z-axis moving part installed on the X-axis moving part to be movable up and down along a Z-axis guide rail provided in the height direction of the stacked electrode body, and the adhesive application member may apply the adhesive toward the sealing surface while moving according to the movement of the Z-axis moving part.

According to the present example, it is possible to provide a side sealing device for a stacked electrode body characterized by comprising a main body frame provided with the press part and the adhesive application part, and comprising a main body part adjusting positions and angles of the press part and the adhesive application part through movement and rotation of the main body frame.

It is preferable that the main body part is provided on both sides of the seating part, respectively.

It is preferable that the press part is provided to extend downward and upward from the upper and lower ends of the main body frame, respectively.

It may comprise a position adjusting part connected to the main body frame to integrally move the main body frame back and forth in the width direction of the stacked electrode body.

It may comprise an angle adjusting part connected to the main body frame to integrally rotate the main body frame in a horizontal direction.

It is preferable that the position adjusting part and the main body frame are connected to each other via the angle adjusting part.

The position adjusting part may comprise a Y-axis guide rail disposed above the main body frame in parallel in the width direction of the stacked electrode body; a Y-axis moving member movably provided on the Y-axis guide rail; and a driving motor providing a driving force to the Y-axis moving member.

According to the present example, it is preferable that it comprises an inspection part generating alignment information of the stacked electrode body seated on the seating part.

In order to achieve the above-described objects, according to one example of the present invention, it is possible to provide a secondary battery comprising a stacked electrode body formed by cross-laminating positive electrodes, separators, and negative electrodes, characterized in that sealing surfaces formed by closely contacting extension portions of the separators up and down with each other are provided in both sides of non-electrode sides of the stacked electrode body, the separator extension portion has a bending degree increasing, based on the height of the stacked electrode body, from the center toward both upper side and lower side, and a fixing force is imparted between the extension portions of the separators by the applied adhesive on the sealing surface.

It is preferable that the sealing surface formed by the applied adhesive is formed on the entire extension portion of the up and down-laminated separators, and the cross section toward the non-electrode side of the stacked electrode body is formed in a trapezoidal shape by the separators at the upper side and lower side, and the sealing surface.

### Advantageous Effects

Through the present invention, it is possible to provide a side sealing device for a stacked electrode body capable of preventing a separator tearing phenomenon that may occur on the long side (non-electrode side) of the stacked electrode body.

Through one example of the present invention, it is possible to provide a side sealing device for a stacked electrode body, which pre-forms the long side of the stacked electrode body so that the sealing surface is formed toward the long side of the stacked electrode body, and then applies an adhesive so that the sealing surface composed of separators is firmly maintained.

Through one example of the present invention, it is possible to provide a stacked electrode body in which a sealing surface formed by closely contacting separators with each other continuously is formed toward the long side to prevent separator damage, and a secondary battery comprising the same.

Through one example of the present invention, it is possible to provide a side sealing device capable of imparting rigidity to the separator extension portions toward the long side effectively and easily through up-down press and lateral-directional pressurization of the separator extension portions toward the long side, and a method thereof.

Through one example of the present invention, it is possible to provide a stacked electrode body capable of effectively and easily protecting separators toward the long side through up-down pressurization of the separators and fixing force enhancement between the separators by means of the adhesive applied in a lateral direction while using conventional separators as they are, and a secondary battery comprising the same.

Through one example of the present invention, it is possible to exclude a preliminary process such as formation of an adhesive layer on each separator extension portion to strengthen the fixing force between the separator extension portions. Therefore, an increase in manufacturing costs can be prevented and a stacked electrode body can be easily manufactured using only a basic separator.

Through one example of the present invention, the separator extension portions are brought into close contact through pressurization to form sealing surfaces, and then the fixing force enhancement and sealing between the separators and sealing enhancement can be performed through a single adhesive application process, thereby simplifying production processes of the stacked electrode body, and increasing production efficiency.

### Description of Drawings

Figures 1 and 2 are diagrams for explaining a taping structure of a stacked electrode assembly according to the conventional technology.
Figure 3 schematically illustrates a configuration diagram of a sealing device for a stacked electrode body according to one example of the present invention.
Figures 4 and 5 schematically illustrate perspective diagrams of a sealing device for a stacked electrode body according to one example of the present invention.
Figure 6 is a diagram for explaining a reference position, an entry position, and a application frame position of a stacked electrode body according to one example of the present invention.
Figure 7 is a diagram for explaining position adjustment of a main body with respect to a stacked electrode body according to one example of the present invention.
Figure 8 is a diagram for explaining, in one example of the present invention, a process in which a first main body frame is moved to a first entry position and a second main body frame is moved to a second entry position.
Figures 9 and 10 are diagrams for explaining, in one example of the present invention, a process in which a first rolling part and a second rolling part pressurize and roll a stacked electrode body.
Figure 11(a) schematically illustrates a cross section of a stacked electrode body before pre-forming according to one example of the present invention, and Figure 11(b) schematically illustrates a cross section of a stacked electrode body pre-formed by a first rolling part and a second rolling part according to one example of the present invention.
Figure 12 is a diagram for explaining a process in which a first adhesive application part and a second adhesive application part apply an adhesive at adhesive application positions to seal both sides of long sides of the stacked electrode body, according to one example of the present invention.
Figure 13 schematically illustrates an example in which an adhesive is applied to a sealing surface according to the preset application pattern in one example of the present invention.
Figure 14 schematically illustrates a partial perspective diagram in which an adhesive is applied to a sealing surface provided on the long side of the stacked electrode body in one example of the present invention.
Figure 15 schematically illustrates a perspective diagram of a stacked electrode body manufactured according to one example of the present invention.
Figure 16 schematically illustrates a cross-sectional diagram taken along line x-x of Figure 15.

### Best Mode

Hereinafter, a side sealing device for a stacked electrode body, a stacked electrode body, and a manufacturing method of the stacked electrode body, according to a preferred example of the present invention will be described with reference to the accompanying drawings. However, the accompanying drawings are exemplary, and the scope of the side sealing device for a stacked electrode body, the stacked electrode body, and the manufacturing method of the stacked electrode body of the present application is not limited by the accompanying drawings.

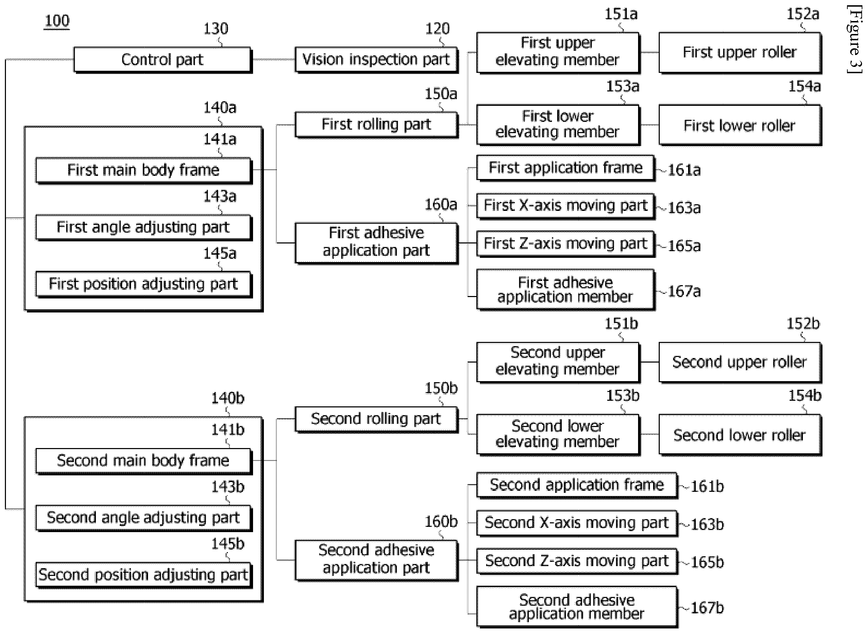

Referring to Figures 3 to 5, the side sealing device (100) for a stacked electrode body according to a preferred example of the present invention comprises a seating part (110) and a control part (130) controlling operation of the sealing device.

A stacked electrode body (200), in which positive electrodes (212), separators (211), and negative electrodes (213) are cross-laminated, is seated on the sating part (110). Sealing is performed toward the long side of the stacked electrode body (200) located on the seating part (110). Therefore, the seating part (110) may be referred to as a side sealing station.

A gripper (115) may be provided on the seating part (110). The gripper (115) may fix the stacked electrode body (200) at the side sealing station. Specifically, the gripper (115) may be provided to restrict the movement of the stacked electrode body (200) by grabbing both sides of the short sides of the stacked electrode body (200). Here, the short side of the stacked electrode body (200) refers to the side portion where the lead tab is installed, and the long side means the side portion where the lead tab is not installed. As shown, the lead tab may be formed on opposite short sides of the rectangular stacked electrode body (200), and the lead tab may be formed on only one short side. In some cases, a stacked electrode body may be manufactured in a shape in which the lead tab is formed on the long sides, but for convenience, in this specification, the long sides refer to non-electrode sides facing each other.

The side sealing device (100) for a stacked electrode body according to a preferred example of the present invention may comprise press parts (150a, 150b).

The width of the separator is greater than the widths of the positive electrode and the negative electrode toward the long sides of the stacked electrode body. That is, the separator extends further to both sides toward the long sides of the stacked electrode body than the positive electrode and the negative electrode to form ends. This may be referred to as a separator extension portion. In other words, the positive electrode and the negative electrode are not located directly above and below the separator ends or the separator extension portions toward the long sides, and upper and lower gaps are formed between the separators by the height or thickness of the positive electrode or negative electrode. Such ends or extension portions of the separator may be damaged due to weak rigidity. Then, distortion may occur in the laminated state in the subsequent processes.

The press parts (150a, 150b) may be provided to form sealing surfaces by allowing a plurality of separators positioned toward the long sides to come into close contact with each other with the upper and lower gaps therebetween. That is, they may be provided to pressurize the plurality of separators to be curved or bent, and more specifically, to pressurize the plurality of bent separators to come into close contact with each other.

It is preferable that the pressurization force of the press parts (150a, 150b) is transmitted from the uppermost and lowermost separators to the middle separator based on the height, that is, the thickness, of the stacked electrode body. The bending angle of the separators at the uppermost side and the lowermost side is the largest, and the bending angle of the separators at the center may be minimized or maintained horizontally.

That is, all the remaining separators except for the separators at the uppermost and lowermost sides may be pressurized by pressurization of the press parts (150a, 150b) to come into close contact with the neighboring separators above and below. The separator located at the upper portion pressurizes the separator located directly below downward while being pressurized downward by the separator located directly above according to the pressurization of the press. The separator located at the lower portion pressurizes the separator located directly above upward while being pressurized upward by the separator located directly below according to the pressurization of the press. Through this pressurization process, the separators converge to the center while being in close contact with each other. Therefore, the separators toward the long sides form sealing surfaces by such close contact.

The press parts (150a, 150b) may be provided in the form of a press block, and may also be provided in the form of a roller. Details of the press part will be described below.

The side sealing device (100) for a stacked electrode body according to a preferred example of the present invention may comprise reinforcing parts (160a, 160b) further reinforcing the sealing surfaces formed through the press parts (150a, 150b). These reinforcing parts (160a, 160b) may comprise a constitution that an adhesive is applied to further impart a fixing force to the sealing surface.

The sealing surfaces are formed by the separators that the separators are bent to be brought into close contact with each other by pressurizing the ends or extension portions of the separators through the press parts (150a, 150b). However, the bent separators tend to return to their original shape over time, and in particular, this tendency can be more prominent as toward the separators at both upper side and lower side. That is, the close contact between the separators may be released.

Therefore, a means capable of maintaining close contact between the separators more firmly is required, and to this end, the present example may comprise sealing surface reinforcing parts.

The reinforcing parts (160a, 160b) may be provided so that in the sealing surfaces formed by the ends of the separators, a fixing force is formed between the ends of the separators, or to impart a fixing force thereto. Such a fixing force may be added through an adhesive to be applied, and details of the reinforcing part will be described below.

The side sealing device (100) for a stacked electrode body according to a preferred example of the present invention may comprise an inspection part (120) inspecting alignment of the stacked electrode body. The inspection part (120) may inspect the alignment through vision. Therefore, the inspection part (120) may be referred to as a vision inspection part (120). The vision inspection part (120) may be installed above the seating part (110). The vision inspection part (120) photographs the stacked electrode body (200) and inspects the alignment of the long sides of the stacked electrode body (200) based on the seating part (110). The vision inspection part (120) may inspect the degree to which the long sides of the stacked electrode body (200) match the preset alignment line (L).

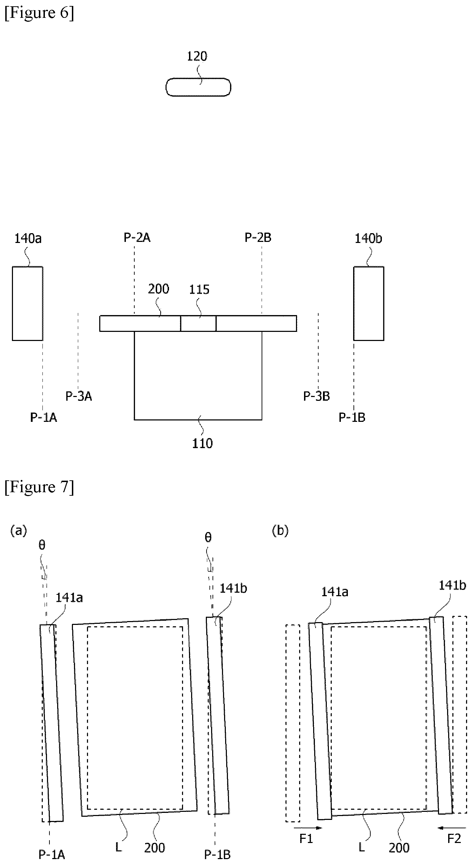

For example, as shown in Figure 7, the vision inspection part (120) calculates an alignment angle (θ) of the long side of the stacked electrode body (200) with respect to the alignment line (L) of the seating part (110). The alignment angle (θ) is an angle of the long side of the stacked electrode body (200) with respect to the alignment line (L) of the seating part (110).

For example, when the long side of the stacked electrode body (200) matches the preset alignment line (L), the alignment angle (θ) is calculated as "0". When the long side of the stacked electrode body (200) is distorted by 5° with respect to the preset alignment line (L), the alignment angle (θ) is calculated as "5°".

The side sealing device (100) according to the present example may be referred to as a device for forming a sealing surface toward the long side of the stacked electrode body (200) and reinforcing the sealing surface. Formation of the sealing surface and reinforcement of the sealing surface must be performed uniformly over both sides of the long sides. Therefore, it is preferable that sealing is performed after alignment of the stacked electrode body (200) is performed, or sealing is performed by reflecting or correcting misalignment.

The control part (130) may receive the long side alignment information sensed by the vision inspection part (120), and control the subsequent side sealing process to be precisely performed. Details of performing the sealing surface forming process by reflecting the alignment information will be described below.

According to one example of the present invention which is preferred, the side sealing device may comprise a main body or a main body part (140a, 140b) for performing a sealing surface forming process. Since the sealing surface forming process may be formed on both sides of two facing long sides of the stacked electrode body (200), it is preferable that a pair of main body parts is provided. The two main body parts (140a, 140b) are disposed to face the long sides of the stacked electrode body (200) with the seating part (110) interposed therebetween, so that sealing surface may be formed on both sides of the long sides of the stacked electrode body (200) at the same time. Of course, one main body part may be provided, so that a sealing surface may be formed on one side of the long sides, and then a sealing surface may be formed on the other side of the long sides. In this case, the entire main body part may be moved, or the seating part may be moved. Specifically, the main body part may rotate 180 degrees, or the seating part may rotate 180 degrees.

In this example, for convenience of explanation, it is assumed that two main body parts (140a, 140b) are provided, and in this case, it may be referred to as a "first body part (140a)" and a "second main body part (140b)" separately. The two main body parts may be formed to be symmetrical to each other and perform symmetrical operations. Therefore, redundant descriptions will be omitted except for differences between the first main body part (140a) and the second main body part (140b).

The main body part, which is described below, and constitutions constituting the same may be a first main body part, and constitutions constituting the same, or may be a single main body part, and constitutions constituting the same.

The main body part (140a) may be installed to face one side of the long sides of the stacked electrode body (200) from one side of the seating part (110).

The main body part (140a) may comprise a main body frame (141a), where a press part (150a) and a reinforcing part (160a) may be provided in the main body frame (141a). Formation and reinforcement of the sealing surface may be performed while the press part (150a) and the reinforcing part (160a) are relatively moved in the main body frame (141a).

In addition, the main body part (140a) may be a device for adjusting the position and angle of the press part (150a) and the reinforcing part (160a). That is, it may be a device that the press part (150a) and the reinforcing part (160a) have appropriate positions and angles based on the alignment information, and formation and reinforcement of the sealing surface are performed.

As described above, the press part (150a) may be a device comprising a roller part and pressurizing through a press roller. In addition, the press part (150a) may be referred to as a rolling part (150a). Furthermore, the reinforcing part (160a) may comprise an adhesive application part applying an adhesive to the separators. Specifically, the reinforcing part (160a) may comprise an adhesive application part applying an adhesive to the ends of the separators forming the sealing surface so that the ends of the separators are in close contact with each other and bonded to each other. In addition, the reinforcement part (160a) may be referred to as an adhesive application part (160a).

In the main body frame (141a), a rolling part (150a) and an adhesive application part (160a) may be installed. Also, the main body frame (141a) may be coupled to the angle adjusting part (143a) and the position adjusting part (145a). The main body frame (141a) may have, as a Korean Alphabet 3^{rd} character ( 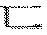 ) structure, a structure in which a portion toward the long side of the stacked electrode body (200) is opened.

On the opened side of the main body frame (141a), a rolling part (150a) may be installed to be capable of elevating in the height direction (z) of the stacked electrode body, and an adhesive application part (160a) may be provided to be elevated together with the rolling part (150a). In addition, the adhesive application part (160a) may be provided to apply the adhesive by moving independently from the rolling part (150a).

Specifically, the rolling part (150a) may comprise an upper roller (152a) and a lower roller (154a).

The upper roller (152a) may be positioned to extend downward from the upper side of the main body frame (141a). The lower roller (154a) may be positioned to extend upward from the lower side of the main body frame (141a).

The adhesive application part (160a) may be positioned to extend in the direction of the seating part from the middle portion of the main body frame. The adhesive application part (160a) may be positioned between the upper roller (152a) and the lower roller (154a).

Since the rolling part (150a) and the adhesive application part (160a) are mounted on the main body frame (141a), they may be provided to be movable integrally with the main body frame (141a).

Meanwhile, as described above, alignment information of an electrode body on which a sealing surface is to be formed may be generated through the vision inspection part. Based on the alignment information, the control part (130) needs to correct the positions and/or angles of the rolling part (150a) and the adhesive application part (160a).

According to this example, the rolling part (150a) and the adhesive application part (160a) are mounted on the main body frame (141a), so that the positions and/or angles of the rolling part (150a) and the adhesive application part (160a) may be corrected through adjustment of the position and/or angle of the main body frame (141a). This is to form a uniform sealing surface over the entire long side. That is, it is to pressurize at the same pressurizing depth at the same position over the entire long side.

Referring to Figure 7, the angle adjusting part (143a) may be coupled to the main body frame (141a) to rotate the main body frame (141a) from a first reference position (P-1A) by an alignment angle (θ) based on long side alignment information. Here, the first reference position (P-1A) may refer to a position where the main body frame (141a) is disposed in parallel with the alignment line (L) of the seating part (110).

That is, the angle adjusting part (143a) may adjust the position of the main body frame (141a) so that the rolling part (150a) and the adhesive application part (160a) installed on the main body frame (141a) are located side by side on one side of the long sides of the stacked electrode body (200).

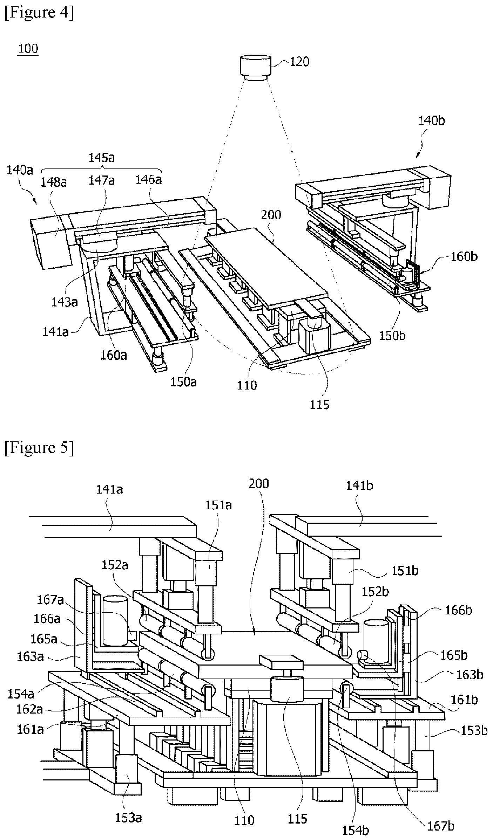

Referring to Figure 4, the position adjusting part (145a) may be coupled to the angle adjusting part (143a) to be connected to the main body frame (141a). The position adjusting part (145a) may comprise a Y-axis guide rail (146a), a Y-axis moving member (147a), and a driving motor (148a).

The Y-axis guide rail (146a) may be provided above the main body frame (141a) in the width direction (y) of the stacked electrode body. The Y-axis moving member (147a) may be installed in the Y-axis guide rail (146a) to be movable back and forth.

The Y-axis guide rail (146a) may be fixed to a ceiling surface as a configuration that is always fixed.

The Y-axis moving member (147a) may be coupled to the driving motor (148a) to be moved forward or backward along the Y-axis guide rail (146a) when the driving motor (148a) operates. The Y-axis moving member (147a) is connected to the main body frame (141a). Therefore, the main body frame may move forward or backward in the direction of the electrode body by the operation of the driving motor (148a) as a whole. This means the forward or backward movement of the rolling part (150a) and the adhesive application part (160a), and the forward or backward movement here means a movement for correcting the position before forming the sealing surface, rather than a movement for directly forming the sealing surface.

The angle adjusting part (143a) may be coupled to the Y-axis moving member (147a). That is, the angle adjusting part (143a) may be provided between the Y-axis moving member (147a) and the main body frame (141a).

The main body frame (141a) may be coupled to the angle adjusting part (143a) to be connected to the Y-axis moving member (147a). While the main body frame (141a) is moved in the movement direction of the Y-axis moving member (147a), its position with respect to the stacked electrode body (200) is adjusted.

The angle adjusting part (143a) may be provided to rotate the main body frame (141a) in a clockwise direction or counterclockwise direction.

The position adjusting part (145a) and the angle adjusting part (143a) may adjust the angle and position of the main body frame (141a) for each step preset in the control part (130).

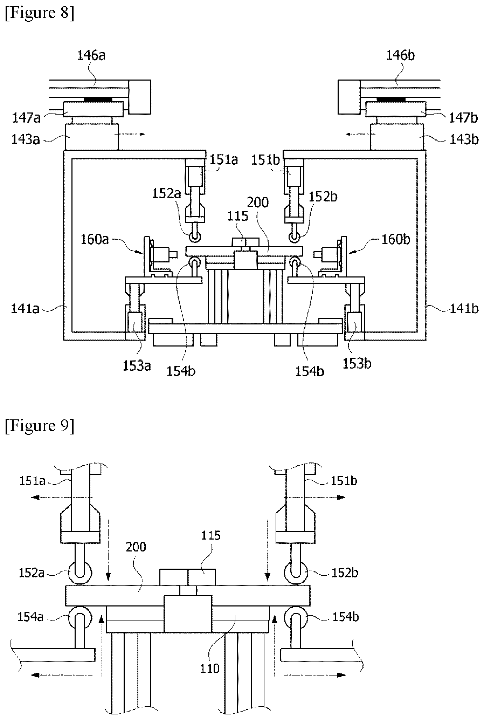

Referring to Figure 8, for example, when pre-forming the long side of the stacked electrode body (200), the position adjusting part (145a) controls the operation of the driving motor (148a) so that the Y-axis moving member (147a) is moved from the first reference position (P-1A) to a first entry position (P-2A) along the Y-axis guide rail (146a). Here, the entry position (P-2A) is a position preset in the control part (130) between the center of the stacked electrode body (200) and one side of the long sides of the stacked electrode body (200).

The position adjusting part (145a) stops the operation of the driving motor (148a) when the Y-axis moving member (147a) reaches the first entry position (P-2A). When the rolling part (150a) pressurizes the stacked electrode body (200) up and down, the position adjusting part (145a) controls the operation of the first driving motor (148a) so that the Y-axis moving member (147a) moves backward from the first entry position (P-2A) toward the first reference position (P-1A).

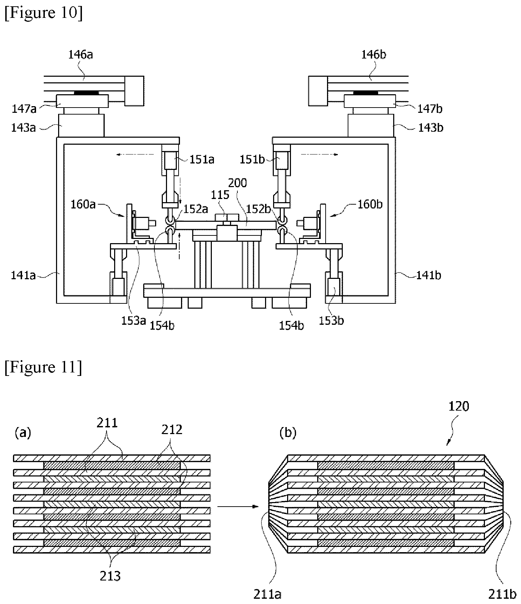

In this process, referring to Figure 11, the rolling part (150a) pressurizes and rolls the stacked electrode body (200) up and down while moving backward along with the main body frame (141a), whereby it may pre-form one side of the long sides of the stacked electrode body (200) so that the ends of the separators (211) at one side of the long sides of the stacked electrode body (200) are gathered in an outward direction of the stacked electrode body (200) and come into contact with each other. That is, the sealing surface may be formed.

In the pre-formed stacked electrode body (200), the ends of the separators (211) closely contact each other to form a sealing surface. For example, the long side of the pre-formed stacked electrode body (200) may form a triangular cross section or trapezoidal cross section. In this example, for convenience of explanation, the surface formed of the ends of the separators (211) at one side of the long sides of the stacked electrode body (200) is referred to as a "sealing surface (211a, 211b)".

Referring to Figures 9 and 10, the rolling part (150a) may comprise an upper elevating member (151a), an upper roller (152a), a lower elevating member (153a), and a lower roller (154a).

The upper roller (152a) may be installed on the upper part of the main body frame (141a) in parallel in the longitudinal direction (x) of the stacked electrode body. The upper roller (152a) is a roller pressurizing and rolling the separator extension portion on the top of the stacked electrode body (200).

The upper elevating member (151a) is coupled to the upper part of the main body frame (141a) and the upper roller (152a). The upper elevating member (151a) lifts or lowers the upper roller (152a) in the height direction (z) of the stacked electrode body.

When the Y-axis moving member (147a) reaches the first entry position (P-2A), the upper elevating member (151a) operates so that the upper roller (152a) pressurizes the separator extension portion on the top of the stacked electrode body (200) while descending.

The upper elevating member (151a) elevates the upper roller (152a) when the Y-axis moving member (147a) moves from the first entry position (P-2A) to the first reference position (P-1A). Upon the elevating operation of the upper elevating member (151a), the pressurization of the upper roller (152a) on the stacked electrode body (200) is released. Here, it is preferable that the pressurization by the upper roller (152a) is not applied directly to the electrode, and is applied only to the extension portions of the separators.

The lower roller (154a) is installed on the main body frame (141a) in parallel in the longitudinal direction (x) of the stacked electrode body. The lower roller (154a) is a roller pressurizing and rolling the separator extension portions upward from the lower portion of the stacked electrode body (200). The lower roller (154a) is installed at the lower part of the main body frame (141a) to face the upper roller (152a).

The lower elevating member (153a) is coupled to the lower part of the main body frame (141a) and the lower roller (154a). The lower elevating member (153a) lifts or lowers the lower roller (154a) in the height direction (z) of the stacked electrode body.

When the Y-axis moving member (147a) reaches the first entry position (P-2A), the lower elevating member (153a) operates so that the lower roller (154a) pressurizes the separator extension portions upward from the bottom of the stacked electrode body (200) while lifting.

The lower elevating member (153a) lowers the lower roller (154a) when the Y-axis moving member (147a) is moved from the first entry position (P-2A) to the first reference position (P-1A). Upon downward operation of the lower elevating member (153a), the pressurization of the lower roller (154a) on the stacked electrode body (200) is released.

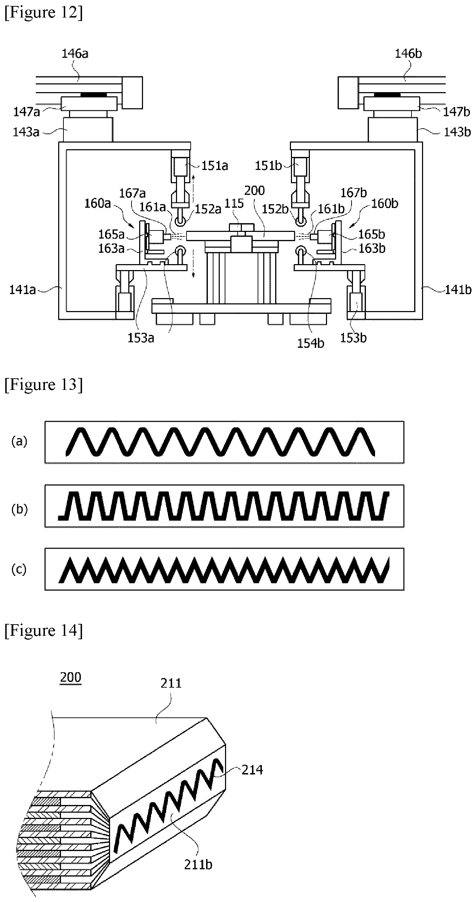

Referring to Figure 12, the stacked electrode body (200) may pre-forms a sealing surface (211a) by the operation of the main body part (140a) and the rolling part (150a) as above so that the ends of the separators (211) abut to each other up and down on one side of the long sides of the stacked electrode body (200), and then the adhesive may be applied.

As shown in Figure 14, the adhesive application part (160a) may apply the adhesive (214) to the sealing surface (211a) to strengthen the sealing surface on one side of the long sides of the stacked electrode body (200). That is, the sealing surface may be strengthened by additionally imparting a fixing force to the generated sealing surface.

As shown in Figure 12, the adhesive application part (160a) may be installed on the main body frame (141a). More specifically, the adhesive application part (160a) may be installed on the lower elevating member (153a). Therefore, the entire adhesive application part (160a) may be moved integrally with the lower roller (154a).

A first adhesive application part (160a) comprises a first application frame (161a), a first X-axis moving part (163a), a first Z-axis moving part (165a), and a first adhesive application member (167a).

The first application frame (161a) is coupled to the first lower elevating member (153a) of the first rolling part (150a). A first lower roller (154a) is installed in the first application frame (161a). The position of the first application frame (161a) is adjusted by the first lower elevating member (153a) so that the adhesive application parts (160a, 160b) correspond to the sealing surfaces.

A first X-axis guide rail (162a) is provided in the first application frame (161a) in the longitudinal direction (x) of the stacked electrode body. The first X-axis moving part (163a) is installed on the first X-axis guide rail (162a). The first X-axis moving part (163a) is installed to be movable left and right on the first X-axis guide rail (162a). A first Z-axis guide rail (164a) is provided on the first X-axis moving part (163a).

The first Z-axis guide rail (164a) is provided parallel to the height direction (z) of the stacked electrode body on one side of the first X-axis moving part (163a) facing the stacked electrode body (200). The first Z-axis moving part (165a) is installed on the first Z-axis guide rail (164a).

The first Z-axis moving part (165a) is coupled to the first X-axis moving part (163a) to be movable up and down along the first Z-axis guide rail (164a). Then, the first adhesive application member (167a) is coupled to the first Z-axis moving part (165a). The first Z-axis moving part (165a) is operated to reciprocate up and down along the first Z-axis guide rail (164a) in a reciprocating cycle according to the preset application pattern.

The first adhesive application part (160a) applies the adhesive (214) toward the first sealing surface (211a) on one side of long sides of the stacked electrode body (200). In the stacked electrode body (200), while the adhesive (214) is cured on the first sealing surface (211a), one side of long sides of the stacked electrode body (200) is sealed.

The first adhesive application member (167a) applies the adhesive (214) to the first sealing surface (211a) according to the preset application pattern by the first X-axis moving part (163a) and the first Z-axis moving part (165a) while it is moved left and right by the first X-axis moving part (163a) and simultaneously reciprocates up and down by the first Z-axis moving part (165a).

Specifically, in the first adhesive application part (160a), while the first X-axis moving part (163a) is moved in the longitudinal direction (x) of the stacked electrode body from the starting point on one side of the long sides of the stacked electrode body (200) toward the end point along the first X-axis guide rail (162a), and the first Z-axis moving part (165a) reciprocates up and down along the first Z-axis guide rail (164a) in the height direction (z) of the stacked electrode body, at the first application position (P-3A), according to the preset application pattern, the first adhesive application part (160a) is operated to apply the adhesive (214) to the first sealing surface (211a).

Referring to Figure 6, the first application position (P-3A) faces the first sealing surface (211a), and is a position parallel to one side of the long sides of the stacked electrode body (200), but spaced apart from one side of the long sides of the stacked electrode body (200) by a predetermined distance.

By the operation of the adhesive application part (160a) as above, the sealing surface on one side of the long sides of the stacked electrode body (200) may be strengthened more firmly.

Specifically, the sealing surface pressurized and formed by the roller is formed by bending the extension portions of the separators and pressurizing them into close contact. If the extension portions of the separators have the same length before pressurizing, the extension lengths after bending may be different from each other. That is, the extension length becomes shorter toward the separator at upper side and the lower side, and the extension length becomes longer toward the separator at center. In this case, the cross section of the sealing surface formed by the extension portions may have a substantially triangular shape.

Due to the adhesive force of the adhesive, a sealing surface having a substantially trapezoidal cross-section may be ultimately formed and firmly maintained. In the sealing surface, the vertically adjacent separator extension portions are coupled by the adhesive. That is, all the separator extension portions are coupled to each other by thermal fusion, so that the entire sealing surface forms a connection rib or a connection wall connecting all the separator extension portions. Through this, the rigidity of the separator extension portions can be very effectively reinforced.

As described above, according to the present example, a pair of main body parts (140a, 140b) may be provided, and thus the respective constitutions may also be provided symmetrically. The adjustment of the positions and angles of the main body frames (141a, 141b) may be simultaneously performed from both sides, and driving of the rolling parts (150a, 150b) and driving of the adhesive application parts (160a, 160b) may also be performed simultaneously from both sides.

Therefore, descriptions of the second main body part (140b) and its constitutions, and descriptions of the operations will be omitted.

Hereinafter, a control method of a sealing device according to one example of the present invention will be described in more detail.

The control part (130) may receive the long side alignment information from the vision inspection part to calculate the alignment angle (θ), the entry position and the application position, and may control the operation of the angle adjusting parts (143a, 143b) and the position adjusting parts (145a, 145b), the rolling parts (150a, 150b) and the application frame parts (160a, 160b) for each preset step.

Here, the entry position is a position set between the long side of the stacked electrode body (200) and the center of the stacked electrode body (200). The adhesive application position is a position on the long side of the stacked electrode body (200) provided with the sealing surface.

In this example, for convenience of explanation, the entry positions will be described by dividing them into "a first entry position (P-2A) and a second entry position (P-2B)". Referring to Figure 6, the first entry position (P-2A) is an arbitrary position on one side of the long sides of the stacked electrode body (200). Then, the second entry position (P-2B) is an arbitrary position on the other side of the long sides of the stacked electrode body (200).

The control part (130) controls the operation of the angle adjusting parts (143a, 143b) so that the main body frames (141a, 141b) are rotated by an alignment angle (θ) from the reference position. The control part (130) controls the operation of the position adjusting parts (145a, 145b) so that the main body frames (141a, 141b) are moved forward from the reference position to the entry position in the width direction (y) of the stacked electrode body.

Continuously, the control part (130) controls the operation of the position adjusting parts (145a, 145b) and the rolling parts (150a, 150b) so that the rolling parts (150a, 150b) pressurizes the stacked electrode body (200) up and down at the entry position, and the rolling parts (150a, 150b) pressurize and roll the long sides of the stacked electrode body (200) up and down while the main body frames (141a, 141b) are moved backward from the entry position to the reference position by the position adjusting parts (145a, 145b).

Next, in the control part (130), the adhesive application parts (161a, 161b) are moved to the application positions by the main body frames (141a, 141b) after the operation of the rolling parts (150a, 150b) is completed.

Subsequently, when the application frames (161a, 161b) reach the application positions, the control part (130) controls the operation of the application frame parts (160a, 160b), and simultaneously applies the adhesive to the sealing surfaces of the stacked electrode body (200). This application of the adhesive is performed through adhesive application members (167a, 167b), and the adhesive application members (167a, 167b) are mounted on the application frames (161a, 161b). Therefore, as the application frames (161a, 161b) move, the application members (167a, 167b) apply the adhesive while moving.

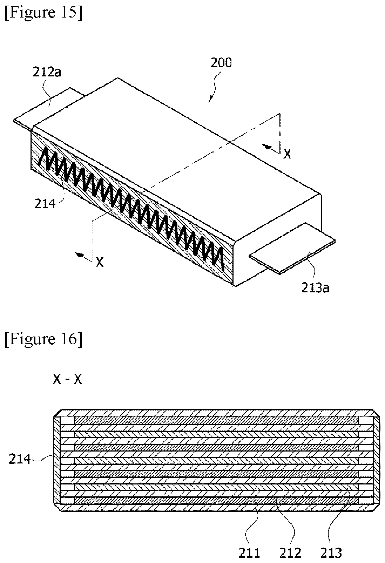

In the conventional sealing process of the stacked electrode body (200), the damage of the separator (211) at upper side and the separator (211) at lower side in the stacked electrode body (200) due to the pressure-sensitive adhesive tape may occur. However, referring to Figures 15 and 16, according to one example of the present invention, both side surfaces of the stacked electrode assembly (200) are sealed by the adhesive, so that it is possible to provide a stacked electrode body capable of effectively preventing the separator damage, and a secondary battery comprising the same.

Also, according to one example of the present invention, both side surfaces of the stacked electrode body (200) are subjected to the bonding method to fix the stacked electrode body (200), so that conventionally, the step in the contact surface between the pressure-sensitive adhesive tape and the stacked electrode body (200), and the overlapping step between the pressure-sensitive adhesive tapes are removed, whereby it is possible to prevent lithium precipitation occurring in a portion where the conventional pressure-sensitive adhesive tape sticks to the stacked electrode body (200).

In addition, according to one example of the present invention, both sides of the stacked electrode body (200) are subjected to the bonding method to fix the stacked electrode body (200), so that in a jig formation process of the stacked electrode body (200), it is possible to secure the uniformity of the J/F surface pressure applied to the stacked electrode body (200).

Furthermore, according to one example of the present invention, both side surfaces of the stacked electrode body (200) are subjected to the bonding method to fix the stacked electrode body (200), so that it is possible to prevent inflow of foreign substances to the stacked electrode body (200) during the activation process.

In addition, compared to the matter that the stacked electrode body (200) is sealed using the conventional pressure-sensitive adhesive tape, according to one example of the present invention, as the separators (211) constituting the stacked electrode body (200) are sealed toward the long sides of the stacked electrode body (200), the thickness of the stacked electrode body (200) is reduced by the thickness of the pressure-sensitive adhesive tape surrounding the stacked electrode body (200), so that it is possible to promote ultra-slimming the stacked electrode body (200).

When the conventional stacked electrode body (200) is sealed while the pressure-sensitive adhesive tape surrounds the outer surface of the stacked electrode body (200), there has been a concern that in the process in which the pressure-sensitive adhesive tape sticks to the stacked electrode body (200), distortion of the separators (211), the positive electrodes (212) and the negative electrodes (213) constituting the stacked electrode body (200) may occur.

On the contrary, according to one example of the present invention, as the long sides of the stacked electrode body (200) are sealed in a state where the gripper (115) holds the short sides of the stacked electrode body (200), it is possible to improve the quality of the stacked electrode body (200) by preventing distortion of the separators (211), the positive electrodes (212) and the negative electrodes (213) constituting the stacked electrode body (200).

The scope of the present invention is indicated by the following claims rather than the above detailed description, and all changes or modifications derived from the meaning and scope of the claims and their equivalent concepts should be construed as being included in the scope of the present invention.

### Industrial Applicability

It is described in the detailed description of the invention.

## Claims

1. A side sealing device for a stacked electrode body comprising:
a seating part in which a stacked electrode body cross-laminated with positive electrodes, separators, and negative electrodes is seated;
a press part pressurizing both sides of non-electrode sides of the stacked electrode body up and down to form sealing surfaces made of the separators so that ends of the separators come into close contact with each other up and down; and
an adhesive application part applying an adhesive to the sealing surfaces in order to strengthen the sealing surfaces by imparting a fixing force between the separators forming the sealing surfaces.

2. The side sealing device for a stacked electrode body according to claim 1, **characterized in that**
the press part is provided to pressurize extension portions of the separators extending further in the width direction of the stacked electrode body than the positive electrodes or the negative electrodes.

3. The side sealing device for a stacked electrode body according to claim 2, **characterized in that**
the press part comprises a roller part performing rotational pressurization.

4. The side sealing device for a stacked electrode body according to claim 3, **characterized in that**
the roller part performs pressurization such that the separators have a bending degree increasing, based on the height direction of the stacked electrode body, from the center toward the upper side and lower side.

5. The side sealing device for a stacked electrode body according to claim 4, **characterized in that**
the rolling part comprises:
an upper roller disposed in parallel with the longitudinal direction of the stacked electrode body and pressurizing and rolling the upper surface of the stacked electrode body while operating downward in the height direction of the stacked electrode body; and
a lower roller facing the upper roller and disposed in parallel with the upper roller, and pressurizing and rolling the lower surface of the stacked electrode body while operating upward in the height direction of the stacked electrode body.

6. The side sealing device for a stacked electrode body according to claim 5, **characterized in that**
the upper roller and the lower roller pressurize and roll the stacked electrode body up and down while moving in the width direction of the stacked electrode body outward from the stacked electrode body, whereby the long sides of the stacked electrode body are pre-formed so that the ends of the separators come into contact with each other to provide the sealing surface.

7. The side sealing device for a stacked electrode body according to claim 5, **characterized in that**
the adhesive application part is provided to move integrally with the lower roller, and is provided to move independently from the lower roller when applying the adhesive.

8. The side sealing device for a stacked electrode body according to claim 1, **characterized in that**
the adhesive application part applies the adhesive while moving in the longitudinal direction of the stacked electrode body and the height direction of the stacked electrode body according to the preset application pattern.

9. The side sealing device for a stacked electrode body according to claim 8, **characterized in that**
the adhesive application part comprises:
an application frame provided with an X-axis guide rail in the longitudinal direction of the stacked electrode body;
an X-axis moving part installed on the X-axis guide rail to be movable left and right; and
an adhesive application member applying the adhesive toward the sealing surface while moving according to the movement of the X-axis moving part.

10. The side sealing device for a stacked electrode body according to claim 9, **characterized in that**
the adhesive application part comprises
a Z-axis moving part installed on the X-axis moving part to be movable up and down along a Z-axis guide rail provided in the height direction of the stacked electrode body, and
the adhesive application member applies the adhesive toward the sealing surface while moving according to the movement of the Z-axis moving part.

11. The side sealing device for a stacked electrode body according to claim 1, **characterized by**
comprising a main body frame provided with the press part and the adhesive application part, and comprising a main body part adjusting positions and angles of the press part and the adhesive application part through movement and rotation of the main body frame.

12. The side sealing device for a stacked electrode body according to claim 11, **characterized in that**
the main body part is provided on both sides of the seating part, respectively.

13. The side sealing device for a stacked electrode body according to claim 12, **characterized in that**
the press part is provided to extend downward and upward from the upper and lower ends of the main body frame, respectively.

14. The side sealing device for a stacked electrode body according to claim 13, **characterized by**
comprising a position adjusting part connected to the main body frame to integrally move the main body frame back and forth in the width direction of the stacked electrode body.

15. The side sealing device for a stacked electrode body according to claim 14, **characterized by**
comprising an angle adjusting part connected to the main body frame to integrally rotate the main body frame in a horizontal direction.

16. The side sealing device for a stacked electrode body according to claim 15, **characterized in that**
the position adjusting part and the main body frame are connected to each other via the angle adjusting part.

17. The side sealing device for a stacked electrode body according to claim 14, **characterized in that**
the position adjusting part comprises:
a Y-axis guide rail disposed above the main body frame in parallel in the width direction of the stacked electrode body;
a Y-axis moving member movably provided on the Y-axis guide rail; and
a driving motor providing a driving force to the Y-axis moving member.

18. The side sealing device for a stacked electrode body according to claim 1, **characterized by**
comprising an inspection part generating alignment information of the stacked electrode body seated on the seating part.

19. A secondary battery comprising a stacked electrode body formed by cross-laminating positive electrodes, separators, and negative electrodes, **characterized in that**
sealing surfaces formed by closely contacting extension portions of the separators up and down with each other are provided in both sides of non-electrode sides of the stacked electrode body,
the extension portions of the separators have a bending degree increasing, based on the height of the stacked electrode body, from the center toward both upper side and lower side, and
a fixing force is imparted between the extension portions of the separators by an adhesive applied to the sealing surfaces.

20. The secondary battery according to claim 19, **characterized in that**
the sealing surface formed by the applied adhesive is formed on the end of the extension portion of the up and down-laminated separators, and the cross section toward the non-electrode side of the stacked electrode body is formed in a trapezoidal shape by the separators of the upper side and lower side, and the sealing surface.
